# EUROPÄISCHE PATENTSCHRIFT

(11) **EP 1 584 133 B1**
(45) Veröffentlichungstag und Bekanntmachung des Hinweises auf die Patenterteilung: **12.05.2010**
(21) Anmeldenummer: 03815525.5
(22) Anmeldetag: 19.12.2003
(51) Int. Cl.: H02P 6/08, H02M 7/515, B63H 23/24

(54) **ELEKTRISCHE MASCHINE FÜR DEN PROPULSIONSANTRIEB EINES U-BOOTS MIT EINER PERMANENTMAGNETISCH ERREGTEN SYNCHRONMASCHINE**
ELECTRIC MACHINE FOR THE PROPULSION DRIVE OF A SUBMARINE OF A SYNCHRONOUS MACHINE EXCITED BY A PERMANENT MAGNET
MACHINE ELECTRIQUE POUR LA PROPULSION D'UN SOUS-MARIN AU MOYEN D'UNE MACHINE SYNCHRONE EXCITEE PAR DES AIMANTS PERMANENTS

(30) Priorität: 15.01.2003 DE 10301272
(43) Veröffentlichungstag der Anmeldung: 12.10.2005
(73) Patentinhaber: SIEMENS AKTIENGESELLSCHAFT, 80333 München (DE)
(72) Erfinder: TÖLLE, Hans-Jürgen, 90419 Nürnberg (DE); VOGEL, Reinhard, 91074 Herzogenaurach (DE); WENGLER, Peter, 91058 Erlangen (DE)
(86) Internationale Anmeldenummer: PCT/DE2003/004221
(87) Internationale Veröffentlichungsnummer: WO 2004/068694

(56) Entgegenhaltungen:
- DE-A- 3 401 164
- US-A- 4 218 646
- US-A- 4 550 267
- MAGENS K: "PERMASYN - EIN PERMANENTERREGTER SYNCHRONMOTOR FUER DEN SCHIFFSBETRIEB. PERMASYN - A PERMANENT-FIELD, CONVERTER-FED MOTOR FOR PROPULSION SYSTEMS" JAHRBUCH DER SCHIFFBAUTECHNISCHEN GESELLSCHAFT, BERLIN, DE, Bd. 81, 1987, Seiten 221-227, XP002043270 ISSN: 0374-1222

## Beschreibung

Die Erfindung bezieht sich auf eine elektrische Maschine für den Propulsionsantrieb eines U-Boots mit einer permanentmagnetisch erregten Synchronmaschine, mit einem Ständer, in dem eine Ständerwicklung angeordnet ist. Zu der Synchronmaschine gehört ein Läufer, auf dem Permanentmagnete vorgesehen sind.

Eine derartige elektrische Maschine, wie sie beispielsweise in der EP-B-0 194 433 näher beschrieben ist, kommt zunehmend in Antriebseinrichtungen von U-Booten zum Einsatz, da ihre Verwendung für derartige Zwecke u.a. mit einer erheblichen Reduzierung des erforderlichen Platzbedarfs einhergeht, woraus sich bootsbauseitig erhebliche Kosteneinsparungen ergeben können.

MAGENS K: "PERMASYN - EIN PERMANENTERREGTER SYNCHRONMOTOR FUER DEN SCHIFFSBETRIEB. PERMASYN - A PERMANENT-FIELD, CONVERTER-FED MOTOR FOR PROPULSION SYSTEMS" JAHRBUCH DER SCHIFFBAUTECHNISCHEN GESELLSCHAFT, BERLIN, DE, Bd. 81, 1987, Seiten 221-227, XP002043270 ISSN: 0374-1222 offenbart eine gattungsgemässe elektrische Maschine für den Propulsionsantrieb eines U-Boots.

Der Erfindung liegt die Aufgabe zugrunde, eine derartige elektrische Maschine für den Propulsionsantrieb eines U-Boots mit einer permanentmagnetisch erregten Synchronmaschine derart weiterzubilden, dass eine im Vergleich zum Stand der Technik erhöhte Redundanz und Verfügbarkeit realisiert wird, wobei mit geringem technisch-konstruktiven Aufwand eine hohe Reduzierung der im Betrieb der elektrischen Maschine entstehenden Geräusche erreichbar sein soll und im Vergleich zum Stand der Technik ein erhöhtes Maß an Windungs- und Erdschlusssicherheit gewährleistet sein soll.

Diese Aufgabe wird erfindungsgemäß durch die Merkmale des Anspruchs 1 gelöst. Bevorzugte Ausgestaltungen sind in den abhängigen Ansprüchen definiert.

Aufgrund der Ausgestaltung der Ständerwicklung als Wellenwicklung, die eine Vielzahl einzelne Wicklungsstränge aufweist, wobei jeder Wicklungsstrang durch einen einphasigen Umrichter gespeist wird, ergibt sich ein im Vergleich zum Stand der Technik beträchtlich erhöhtes Maß an Windungs- und Erdschlusssicherheit; des weiteren ist es möglich, die derart ausgestaltete elektrische Maschine auch bei einem einpoligen Windungs- und Erdschluss weiter zu betreiben. Durch die Anordnung der in Umrichtermodulen vorgesehenen Umrichter innerhalb des Maschinengehäuses in axialer Richtung zwischen dem A-und dem B-seitigen Lagerschild wird eine hohe Kompaktheit der gesamten Antriebsanlage des U-Boots und eine weitgehende Unempfindlichkeit gegenüber äußeren Störeinflüssen erreicht, wobei darüber hinaus die von den Umrichtern ausgehenden EMV-Störbeeinflussungen weitestgehend reduziert werden. Da jeder Wicklungsstrang der als Wellenwicklung ausgebildeten Ständerwicklung durch einen separaten einphasigen Umrichter gespeist wird, ist eine hohe Redundanz erreichbar. Des Weiteren ergibt sich aufgrund der separaten Speisung durch einphasige Umrichter die Möglichkeit, auch die Oberwellen des elektromagnetischen Feldes nutzbringend zur Drehmomentenbildung zu verwenden, da sich durch die einphasige Speisung der Wicklungsstränge nahezu beliebige zeitliche Verläufe der Ständerströme realisieren lassen. Insbesondere besteht in diesem Zusammenhang die Möglichkeit, die Zeitverläufe der Ständerströme so zu wählen, dass die störenden Pendelmomente sehr klein werden und damit die hohen Anforderungen an die Geräuscharmut für Antriebsanlagen von U-Booten erfüllt werden können. Die Umrichter der vorstehend geschilderten elektrischen Maschine sind in vorteilhafter Weise in Modulbauweise ausgeführt.

Gemäß einer weiteren vorteilhaften Ausgestaltung der erfindungsgemäßen elektrischen Maschine ist deren Wellenwicklung als Stabwicklung ausgebildet. Gemäß einer weiteren vorteilhaften Ausführungsform der erfindungsgemäßen elektrischen Maschine hat die als Wellenwicklung ausgebildete Ständerwicklung der permanentmagnetisch erregten Synchronmaschine eine geradzahlige Anzahl von Wicklungssträngen, so dass in jedem Umrichtermodul in vorteilhafter Weise zwei Umrichter angeordnet werden können. Durch die Wahl einer geradzahligen Anzahl von Wicklungssträngen und Umrichtern ist es weiterhin in vorteilhafter Weise möglich, jeweils die Hälfte der Umrichter an ein von zwei Teilnetzen des Bordnetzes anzuschließen und dabei eine gleichmäßige Lastaufteilung auf beide Teilnetze zu erreichen.

Die permanentmagnetisch erregte Synchronmaschine der erfindungsgemäßen elektrischen Maschine kann vorteilhaft 24 Wicklungsstränge aufweisen, denen 24 Umrichter und 12 Umrichtermodule zugeordnet sind, wobei in den Umrichtermodulen jeweils zwei Umrichter angeordnet sind.

Es ist möglich, dass jedes Umrichtermodul ein oder mehrere Umrichter aufweist.

Im folgenden wird die Erfindung anhand einer Ausführungsform unter Bezugnahme auf die Zeichnung näher erläutert.

Es zeigen:
- FIGUR 1: einen Teilschnitt einer prinzipiellen Ausführungsform einer erfindungsgemäßen elektrischen Maschine mit ei- ner permanent magnetisch erregten Synchronmaschine und innerhalb des Maschinengehäuses angeordneten Um- richtern; und
- FIGUR 2: eine Prinzipdarstellung einer Anordnung von Wick- lungssträngen und Umrichtern der in FIGUR 1 gezeigten Ausführungsform der erfindungsgemäßen elektrischen Maschine.

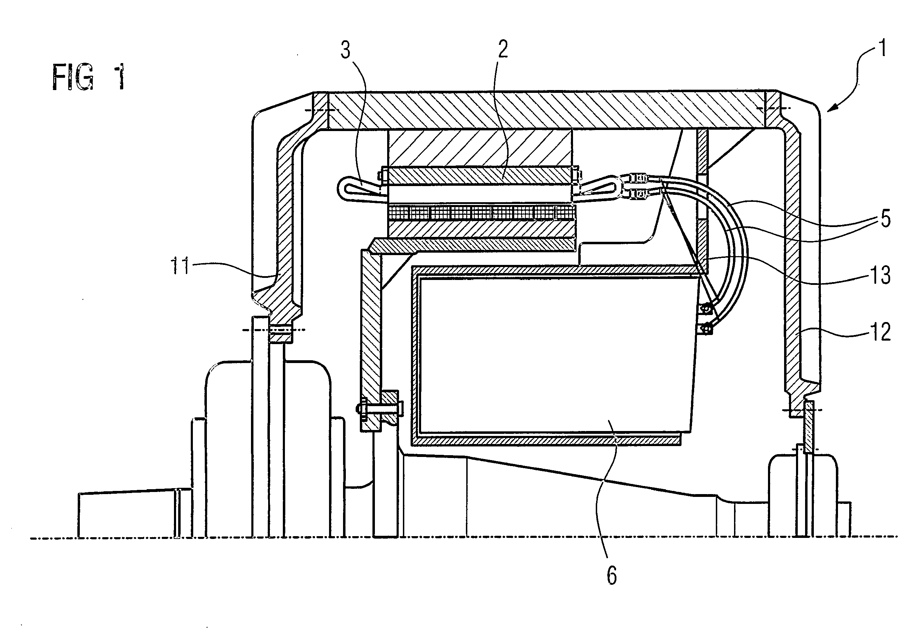

Eine in FIGUR 1 in prinzipieller Form im Teilschnitt dargestellte elektrische Maschine mit einer permanentmagnetisch erregten Synchronmaschine 1 wird in U-Booten als Propulsionsantrieb eingesetzt. Ein wesentlicher Bestandteil der permanentmagnetisch erregten Synchronmaschine 1 einer derartigen Antriebsanlage ist ein Ständer 2 mit einer Ständerwicklung 3.

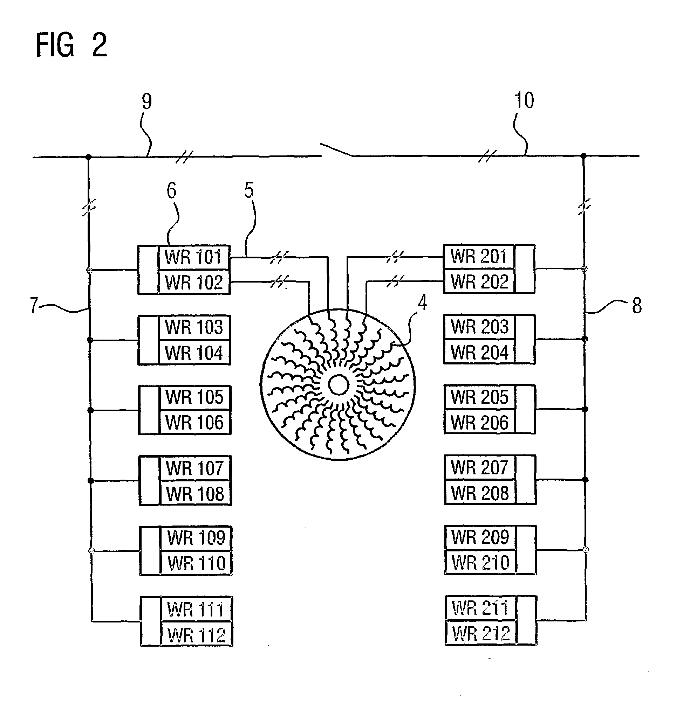

Im Falle der erfindungsgemäßen Ausführungsform der elektrischen Maschine ist die Ständerwicklung 3 als Wellenwicklung 3 ausgebildet. Diese als Wellenwicklung 3 ausgebildete Ständerwicklung 3, hat, wie sich insbesondere aus der prinzipiellen Darstellung in FIGUR 2 ergibt, eine Vielzahl von Wicklungssträngen 4, von denen im Falle der in FIGUR 2 prinzipiell gezeigten Ständerwicklung 3 24 Wicklungsstränge 4 vorgesehen sind.

Der Anschluss jedes einzelnen Wicklungsstrangs 4 an einen ihm allein zugeordneten Umrichter WR101 bis WR112 bzw. WR201 bis WR212 erfolgt mittels Verbindungsleitungen 5. Jeder Wicklungsstrang 4 der als Wellenwicklung 3 ausgebildeten Ständerwicklung 3 der Synchronmaschine 1 wird durch den jeweils einen, nur für diesen Wicklungsstrang 4 vorgesehenen Umrichter WR gespeist. Die Umrichter WR, die die Ständerwicklung 3 speisen, sind im Inneren der permanentmagnetisch erregten Synchronmaschine 1 in axialer Richtung zwischen einem A-seitigen Lagerschild 11 und einem B-seitigen Lagerschild 12 in einem Umrichterhaltegerüst 13 angeordnet und befinden sich in Umrichtermodulen 6.

Bei dem in FIGUR 2 gezeigten Ausführungsbeispiel sind jeweils zwei Umrichter WR, nämlich die Umrichter WR101 und WR102, die Umrichter WR103 und WR104, die Umrichter WR105 und WR106, die umrichter WR107 und WR108, die Umrichter WR109 und WR110, die Umrichter WR111 und WR112, die Umrichter WR201 und WR202, die Umrichter WR203 und WR204, die Umrichter WR205 und WR206, die Umrichter WR207 und WR208, die Umrichter WR209 und WR210 und die Umrichter WR211 und WR121 zu einem Umrichtermodul 6 zusammengefaßt.

Jeweils sechs Umrichtermodule 6 sind über eine für sie vorgesehene Anschlussleitung 7 bzw. 8 an jeweils ein Teilnetz 9 bzw. 10 eines Bordnetzes angeschlossen.

Anstelle von zwei Umrichtern WR je Umrichtermodul 6 können mehr als zwei Umrichter WR zu einem Umrichtermodul zusammengefasst sein.

## Patentansprüche

1. Elektrische Maschine für den Propulsionsantrieb eines U-Boots mit einer permanentmagnetisch erregten Synchronmaschine (1), mit einem Ständer (2), in dem eine Ständerwicklung (3) angeordnet ist, die eine Vielzahl Wicklungsstränge (4) aufweist, wobei jeder Wicklungsstrang (4) durch einen separaten, einphasigen Umrichter (WR) gespeist ist, wobei sich die Umrichter (WR) in Form von Umrichtermodulen (6) im inneren der Synchronmaschine (1) befinden und die Umrichter (WR) in axialer Richtung zwischen einem A-seitigen Lagerschild (11) und einem B-seitigen Lagerschild (12) in einem Umrichterhaltegerüst (13) angeordnet sind,
**dadurch gekennzeichnet, dass** die Ständerwicklung als Wellenwicklung ausgebildet ist.

2. Elektrische Maschine nach Anspruch 1, deren Wellenwicklung (3) als Stabwicklung ausgebildet ist.

3. Elektrische Maschine nach Anspruch 1 oder 2, deren Wellenwicklung (3) eine geradzahlige Anzahl von Wicklungssträngen (4) aufweist, denen eine ebenso große Anzahl von Umrichtern (WR) zugeordnet ist.

4. Elektrische Maschine nach einem der Ansprüche 1 bis 3, bei der Umrichtermodule (6) vorgesehen sind, in denen jeweils ein, zwei oder mehrere Umrichter (WR) angeordnet ist bzw. sind.

5. Elektrische Maschine nach einem der Ansprüche 1 bis 4, bei der jeweils die Hälfte der Umrichter (WR) an ein von zwei Teilnetzen (9, 10) des Bordnetzes angeschlossen ist.

6. Elektrische Maschine nach einem der Ansprüche 1 bis 5, deren Synchronmaschine (1) 24 Wicklungsstränge (4) aufweist, denen 24 Umrichter (WR) und 12 Umrichtermodule (6) zugeordnet sind, in denen jeweils Umrichter (WR) angeordnet sind.

## Claims

1. Electric machine for the propulsion drive of a submarine, the machine comprising a synchronous machine (1) excited by means of a permanent magnet and having a stator (2) in which there is arranged a stator winding (3) which has a plurality of phase windings (4), wherein each phase winding (4) is fed by a separate single-phase inverter (WR), with the inverters (WR) being located in the interior of the synchronous machine (1) in the form of inverter modules (6) and the inverters (WR) being arranged in the axial direction between an A-side end shield (11) and a B-side end shield (12) in an inverter holder frame (13),
**characterised in that** the stator winding is embodied as a wave winding.

2. Electric machine according to claim 1, the wave winding (3) of which is embodied as a bar winding.

3. Electric machine according to claim 1 or 2, the wave winding (3) of which has an even number of phase windings (4) to which an equally large number of inverters (WR) are assigned.

4. Electric machine according to one of claims 1 to 3, wherein inverter modules (6) are provided in which one, two or more inverters (WR) are arranged in each case.

5. Electric machine according to one of claims 1 to 4, wherein half of the inverters (WR) in each case are connected to one of two subsystems (9, 10) of the onboard electrical system.

6. Electric machine according to one of claims 1 to 5, the synchronous machine (1) of which has 24 phase windings (4) to which there are assigned 24 inverters (WR) and 12 inverter modules (6) in each of which inverters (WR) are arranged.

## Revendications

1. Machine électrique pour la propulsion d'un sous-marin, comprenant une machine ( 1 ) synchrone excitée par des aimants permanents, un rotor ( 2 ) dans lequel est disposé un enroulement ( 3 ) rotorique qui a une pluralité d'enroulements ( 4 ) de phase, chaque enroulement ( 4 ) de phase étant alimenté par un convertisseur ( WR ) monophasé distinct, les convertisseurs ( WR ) se trouvant sous la forme de modules ( 6 ) de convertisseurs à l'intérieur de la machine ( 1 ) synchrone et les convertisseurs ( WR ) étant disposés en direction axiale entre un flasque ( 11 ) du côté A et un flasque ( 12 ) du côté B dans un cadre ( 13 ) de maintien de convertisseur,
**caractérisé en ce que** l'enroulement statorique est constitué sous la forme d'un enroulement ondulé.

2. Machine électrique suivant la revendication 1, dont l'enroulement ( 3 ) ondulé est constitué sous la forme d'un enroulement à barre.

3. Machine électrique suivant la revendication 1 ou 2, dont l'enroulement ( 3 ) enroulé a un nombre paire d'enroulements ( 4 ) de phase, auquel est affecté un nombre aussi grand de convertisseurs ( WR ).

4. Machine électrique suivant l'une des revendications 1 à 3, dans laquelle il est prévu des modules ( 6 ) de convertisseur, dans lesquels est disposé ou sont disposés respectivement un, deux ou plusieurs convertisseurs ( WR ).

5. Machine électrique suivant l'une des revendications 1 à 4, dans laquelle respectivement la moitié des convertisseurs ( WR ) est raccordée à l'un de deux réseaux ( 9, 10 ) partiels du réseau de bord.

6. Machine électrique suivant l'une des revendications 1 à 5, dont la machine ( 1 ) synchrone a des enroulements ( 4 ) de phase, auxquels sont affectés 24 convertisseurs ( WR ) et 12 modules ( 6 ) de convertisseur, dans lesquels sont disposés respectivement des convertisseurs ( WR ).
